Europäisches Patentamt

European Patent Office

Office européen des brevets

(19)

(11) **EP 0 583 708 B1**

(12) **EUROPÄISCHE PATENTSCHRIFT**

(45) Veröffentlichungstag und Bekanntmachung des Hinweises auf die Patenterteilung:
**29.04.1998 Patentblatt 1998/18**

(51) Int Cl.⁶: **G01M 3/24**

(21) Anmeldenummer: **93112653.6**

(22) Anmeldetag: **06.08.1993**

(54) **Verfahren und Einrichtung zur Kalibrierung bei der Ultraschall-Leckage-Ortung**

Procedure and device for calibrating a ultrasonic system for locating leaks

Procédé et dispositif de calibrage pour un système de localisation de fuites pour ultrasons

(84) Benannte Vertragsstaaten:
**BE CH DE ES FR GB LI NL SE**

(30) Priorität: **19.08.1992 DE 4227460**

(43) Veröffentlichungstag der Anmeldung:
**23.02.1994 Patentblatt 1994/08**

(73) Patentinhaber: **SIEMENS AKTIENGESELLSCHAFT**
**80333 München (DE)**

(72) Erfinder:
• **Kunze, Ulrich, Dr.**
**D-91054 Erlangen (DE)**

• **Knoblach, Walter, Dr.**
**D-91058 Erlangen (DE)**
• **Schulze, Günther, Dr.**
**D-90768 Fürth (DE)**

(56) Entgegenhaltungen:
**EP-A- 0 140 174**

• **PATENT ABSTRACTS OF JAPAN vol. 12, no. 295 (P-743)11. August 1988 & JP-A-63 070 139 (HITACHI LTD U.A.) 30. März 1988**
• **PATENT ABSTRACTS OF JAPAN vol. 7, no. 113 (P-197)(1258) 18. Mai 1983 & JP-A-58 034 334 (TOKYO SHIBAURA DENKI KK) 28. Februar 1983**

## Beschreibung

Die Erfindung bezieht sich auf ein Verfahren zur Ultraschall-Leckage-Ortung, bei dem die an verschiedenen Meßorten entlang einer Meßstrecke gemessenen Ultraschallpegel in einem Balkendiagramm dargestellt werden und bei dem der Schnittpunkt zweier Geraden in diesem Balkendiagramm zur Kennzeichnung des Leckage-Ortes ermittelt wird. Die Erfindung bezieht sich weiterhin auf eine Einrichtung zur Durchführung eines solchen Verfahrens zur Ultraschall-Leckage-Ortung.

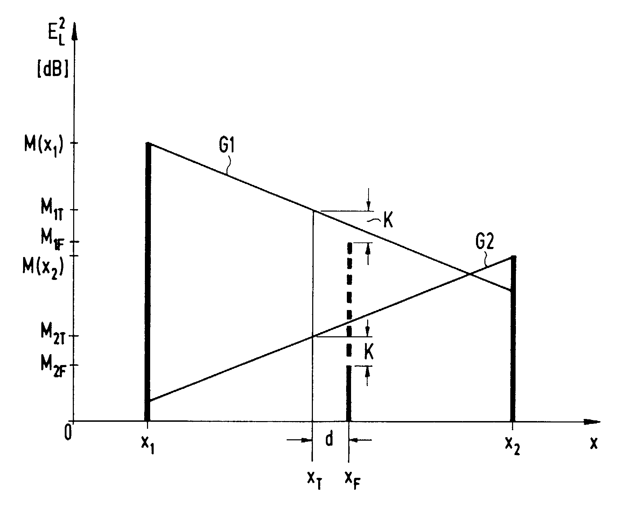

Ein Verfahren und eine Einrichtung der eingangs genannten Art sind aus der EP-0 140 174 A1, insbesondere Figur 5, und aus dem Prospekt "ALÜS Akustisches Leck-Überwachungssystem", Bestell-Nr. A19100-U653-A212, April 1990, der Siemens AG, Bereich Energieerzeugung, D-91052 Erlangen, bekannt. Aus der EP-0 140 174 A1 ist zu entnehmen, daß ein Verstärkungsfaktor kalibriert werden kann.

Das hier betrachtete Verfahren zur akustischen Leckage-Überwachung basiert auf der Tatsache, daß durch ein Leck ausströmende und sich entspannende Flüssigkeiten, Dämpfe oder Gase Körperschall erzeugen. Diese Geräusche breiten sich in den betroffenen Komponenten (z.B. Rohrleitungen, Behältern, Pumpen, Ventilen) aus und werden von Schallwandlern oder Schallaufnehmern gemessen. Letztere sind an der Oberfläche der überwachten Komponenten in gewissen Abständen angebracht.

Als Meßgröße wird dabei der Effektiv- oder RMS-Wert der hochfrequenten Schallwandler-Signale benutzt. Während des Normalbetriebes verursachen die Strömungsgeräusche einen Untergrund-Signalpegel $E_o$. Das plötzliche Auftreten eines Lecks erzeugt einen Leckage-Geräuschpegel $E_L$ am Ort $x_i$ des Schallwandlers ($i = 1, 2, ...$), dessen Höhe von der Größe der Leckage und ihrer Entfernung vom Schallwandler abhängt. Der Gesamtgeräuschpegel $E_{L,o}$ am Ort $x_i$ eines Wandlers entsteht durch eine Überlagerung des Leckage-Geräusches und des Betriebs-Geräusches nach folgender Formel:

$$E_{L,o} = (E_o^2 + E_L^2)^{0,5}. \qquad (1)$$

Das bedeutet, daß eine Leckage, die am Ort $x_i$ des Schallaufnehmers den gleichen Geräuschpegel wie das Betriebsgeräusch erzeugt, den Gesamtgeräuschpegel um etwa 40 % erhöht; das ist ein Anstieg, der gut meßbar ist.

Für die Ortung des Lecks ist zunächst für jeden Meßort $x_i$ aus den gemessenen Schallpegeln der Aufnehmer der Anteil zu bestimmen, der durch das Leckgeräusch bestimmt wird. Das geschieht bekanntermaßen durch Subtraktion des Untergrundgeräusches $E_o^2$ der Anlage gemäß

$$E_L^2 = E_{L,o}^2 - E_o^2. \qquad (2)$$

Die Netto-Schallpegel $E_L^2$ an den i verschiedenen Orten $x_i$ entlang der Meßstrecke werden logarithmisch in einem Balkendiagramm dargestellt, und - sofern eine Leckage vorliegt -der Schnittpunkt zweier dann vorhandener Geraden wird zur Kennzeichnung des Leckage-Ortes $x_L$ herangezogen.

Mit anderen Worten: Bei dem hier betrachteten Verfahren wird mit mehreren fest installierten Aufnehmern im Ultraschallbereich der Betriebs-Schallpegel (RMS-Wert) auf anomale Veränderungen überwacht. Der Frequenzbereich ist so gewählt, daß die über dem Betriebs-Schallpegel liegenden hochfrequenten Anteile des Leckgeräusches erfaßt werden, und daß die niederfrequenten, mechanisch angeregten Schallwellen jedoch ausgefiltert werden. Im Normalbetrieb sind die RMS-Werte der einzelnen Aufnehmer weitgehend konstant; Leckagen dagegen verursachen einen Anstieg der Werte. Gemäß dem bekannten Verfahren wird hieraus für jeden Aufnehmer der ausschließlich auf die Leckage zurückgehende Anteil bestimmt; er nimmt mit zunehmendem Abstand vom Leck gesetzmäßig ab.

Wie bereits erwähnt, wird dieser Anteil logarithmisch als Funktion der einzelnen Aufnehmerorte $x_i$ in Form eines Balkendiagramms dargestellt. Längere oder sich verzweigende Rohrleitungen werden in Überwachungs-Abschnitte aufgeteilt, und für jeden Abschnitt wird ein solches Balkendiagramm erstellt.

Innerhalb einer Komponente (Flansch, Pumpe, usw.) einer zu überwachenden Anlage sind in der Regel die Schallausbreitungsbedingungen sehr kompliziert und im einzelnen nur sehr schwierig zu erfassen. Für die Leckortung verwendete Aufnehmer an einer solchen Komponente erhalten so in der Regel ein Schallsignal, von dem a priori nicht exakt gesagt werden kann, wie stark es gedämpft wurde. Auch die Aufnehmerkopplung hat Einfluß auf die gemessenen Schallpegel und die Ermittlung des Ortes. Das bisherige Ortungsverfahren berücksichtigt diese Tatsachen nicht, wodurch wiederum die Genauigkeit der Ortung leidet.

Aufgabe der Erfindung ist es, das eingangs genannte Verfahren dahingehend zu verbessern, daß eine genauere Leckage-Ortung möglich ist. Weiterhin soll eine Einrichtung zur Durchführung dieses Verfahrens angegeben werden.

Die Erfindung basiert auf der Überlegung, daß sich Ortsfehler und Meßfehler weitgehend durch Kalibrierung des individuellen Ultraschall-Aufnehmers ausschalten lassen.

Die Aufgabe bezüglich des Verfahrens wird erfindungsgemäß durch die Merkmalskombination des Anspruchs 1 gelöst.

Die Einrichtung zur Durchführung des Verfahrens zeichnet sich erfindungsgemäß durch die Merkmalskombination des Anspruchs 3 aus.

Vorteilhafte Ausgestaltungen der Erfindung sind in den Unteransprüchen angegeben.

Ausführungsbeispiele der Erfindung werden im folgenden anhand der Figur näher erläutert.

Bei der Betrachtung der Figur wird davon ausgegangen, daß zur Ultraschall-Leckage-Ortung entlang einer Meßstrecke eine Anzahl von Ultraschall-Aufnehmern (nicht gezeigt) vorgesehen sind, deren Pegel gemessen werden. Zur Kalibrierung ist ein individueller Sensor am Ort $x_F$ herausgegriffen. Denn es wird weiterhin davon ausgegangen, daß die Ortsbestimmung $x_F$ dieses Sensors ungenau ist und daß dieser Sensor selbst falsch anzeigt, beispielsweise wegen fehlerhafter Ankopplung oder wegen einer unkorrekten Verstärkung seines Ausgangssignals. Schwierigkeiten in dieser Hinsicht können insbesondere bei Sprüngen in der Dämpfung entlang der Meßstrecke auftreten. Von Bedeutung für die Leckortbestimmung ist also die Bestimmung des wahren Ortes $x_T$ und des wahren Pegels $M_T$, der eigentlich angezeigt werden sollte, bei diesem Sensor. Denn man kann sagen, daß die Leckortbestimmung bei der späteren Messung um denjenigen Ortsfehler mit Sicherheit falsch ist, um den die Sensorposition falsch bestimmt wurde. Eine solche Positionsbestimmung ist in Kraftwerken häufig problematisch, da kaum Zugang zu einigen Komponenten möglich ist, beispielsweise infolge der Isolierungen, die an solchen Komponenten angebracht sind. Infolge dieser Hindernisse ist es möglich, daß die Sensorposition z. B. nur auf einen halben Meter genau bekannt ist. Trotz dieser Ungenauigkeit sollte der Leckageort möglichst genau bestimmt werden, beispielsweise auf einige Zentimeter genau.

Zur Lösung werden eine erste und eine zweite Meßgerade G1 bzw. G2 bereitgestellt, bei denen der Ultraschallpegel $E_L^2$ logarithmisch über dem Ort x dargestellt ist. Diese Geraden G1, G2 erstrecken sich jeweils von $x_1$ bis $x_2$, und zwar jeweils in ein Gebiet beidseitig des (falsch bestimmten) Sensorortes $x_F$. Nun wird davon ausgegangen, daß an der Stelle $x_1$ ein erster Kalibriersender positioniert ist. Dieser erste Sender gibt ein Ultraschallsignal ab, das mit Hilfe des Sensors an der Stelle $x_F$ als erstes (infolge eines Verstärkungsfehlers verfälschtes) Meßsignal $M_{1F}$ gemessen wird. Entsprechend ist an der Stelle $x_2$ ein zweiter Kalibriersender positioniert. Nach Abschalten des ersten Senders und Einschalten des zweiten Senders wird dessen (ebenfalls verfälschtes) Meßsignal $M_{2F}$ mit Hilfe des betreffenden Sensors ermittelt.

Mathematisch lassen sich nun die Verstärkung und/oder der Ort des Sensors derart ändern, daß die Meßsignale $M_{1F}$ und $M_{2F}$ auf der ersten bzw. der zweiten Meßgeraden G1 bzw. G2 liegen. Auf diese Weise erhält man die "tatsächlichen" Meßwerte $M_{1T}$ bzw. $M_{2T}$. Bei dieser Operation lassen sich ein Korrekturwert d zur Ermittlung des Ortsfehlers ($d = x_F - x_T$) sowie ein Korrekturwert zur Ermittlung des Verstärkungsfehlers K ($K = M_{1T} - M_{1F} = M_{2T} - M_{2F}$) ermitteln.

Zur Ermittlung der beiden Meßgeraden G1 und G2 ist folgendes zu sagen: Nach einer ersten Möglichkeit kann man sie mittels ortsgetreuer und korrekter Sensoren ermitteln, wenn der erste bzw. zweite Kalibriersender eingeschaltet ist. Nach einer zweiten Möglichkeit können diese Meßgeraden G1, G2 zu einem anderen Zeitpunkt mit einer geeichten Meßanordnung und mit einen ortsveränderlichen Sensor gemessen worden sein. Nach einer dritten Möglichkeit schließlich können diese Geraden G1 und G2 durch Erfahrungswerte vorgegeben sein, die z. B. an einer anderen Anlage gleichen Typs gewonnen wurden. Bei der ersten - hier bevorzugten - Möglichkeit handelt es sich also um die Aufnahme der ersten Meßgeraden mittels des ersten Kalibriersenders und um die Aufnahme der zweiten Meßgeraden G2 mittels des zweiten Kalibriersenders. Dabei ist der zweite Kalibriersender G2 an einer anderen Stelle als der ersten Kalibriersender G1 angeordnet, und zwar auf der anderen Seite des mutmaßlich fehlerhaft messenden und/oder fehlpositionierten Sensors (Ort $x_F$).

Im folgenden soll noch etwas näher auf die mathematische Ermittlung der Korrekturgrößen d und K eingegangen werden, die für die spätere Leckortbestimmung mit großer Präzision von Bedeutung sind.

Die erste Gerade G1 läßt sich folgendermaßen beschreiben:

$$M_1 = -\alpha \, (x - x_1) + M(x_1)$$

Entsprechend läßt sich die zweite Gerade G2 folgendermaßen beschreiben:

$$M_2 = +\alpha \, (x - x_2) + M(x_2).$$

Die Ergebnisse der Messung mittels des ersten und des zweiten Senders sind die Werte $M_{1F}$ und $M_{2F}$. Bekannt ist $x_F$. Somit gilt für den tatsächlichen Sensorort $x_T$

$$x_T = x_F - d.$$

Weiterhin gilt, da mit logarithmischen Werten gearbeitet wird:

$$M_{1T} = M_{1F} + K$$

und

$$M_{2T} = M_{2F} + K$$

Aus diesen Gleichungen lassen sich zwei Gleichungen mit den Unbekannten d und K bilden. Letztere Größen d und K lassen sich aus diesen beiden Gleichungen bestimmen. Damit ist nun der wahre Ort $x_T$ und die wahre Verstärkung $M_T$ des Sensors bestimmbar.

Nachdem diese Kalibrierung durchgeführt ist, können die Korrekturwerte d und K bei der anschließenden Ortung eingesetzt werden. Bei der Ortsbestimmung erfolgt jeweils eine Subtraktion des Korrekturwertes d gemäß der Beziehung

$$x_T = x_F - d,$$

und bei der Pegelbestimmung erfolgt jeweils eine Addition des Korrekturwertes K gemäß der Beziehung

$$M_T = M_F(x_F) + K.$$

Die Korrekturwerte d und K für sämtliche Sensoren können in Form einer Tabelle in einem Rechner gespeichert werden. Die Werte K können aber auch zu einer Korrektur der Verstärkereinstellung der einzelnen Verstärker der zugehörigen Sensoren führen.

**Patentansprüche**

1. Verfahren zur Ultraschall-Leckage-Ortung, bei dem die an verschiedenen Meßorten entlang einer Meßstrecke gemessenen Ultraschallpegel in einem Balkendiagramm dargestellt werden und bei dem der Schnittpunkt zweier Geraden in diesem Balkendiagramm zur Kennzeichnung des Leckage-Ortes ermittelt wird, **dadurch gekennzeichnet**, daß eine Kalibrierung mindestens eines individuellen der Ultraschall-Aufnehmer bezüglich seines Verstärkungsfaktors und seines Ortsfehlers mit Hilfe eines ersten Senders, der entlang der Meßstrecke auf der einen Seite des zu kalibrierenden Ultraschall-Aufnehmers sendet, und mit Hilfe eines zweiten Senders, der auf der anderen Seite des zu kalibrierenden Ultraschall-Aufnehmers sendet, derart durchgeführt wird, daß der vom ersten Sender erzeugte Ultraschallpegel mit Hilfe des zu kalibrierenden Ultraschall-Aufnehmers gemessen wird, woraus ein erstes logarithmiertes Signal ($M_1$) gebildet wird, daß der vom zweiten Sender erzeugte Ultraschallpegel mit Hilfe des zu kalibrierenden Ultraschall-Aufnehmers gemessen wird, woraus ein zweites logarithmiertes Signal ($M_2$) gebildet wird, und daß diese beiden Signale ($M_1$, $M_2$) mit vorgegebenen Geraden (G1, G2) verglichen werden dergestalt, daß sich ein Korrekturwert (d) für den Ortsfehler und ein Korrekturwert (K) für den Verstärkungsfaktorfehler ergibt.

2. Verfahren nach Anspruch 1, **dadurch gekennzeichnet**, daß die beiden Geraden (G1, G2)

   a) mittels ortsgetreuer und korrekt angebrachter Sensoren ermittelt oder
   b) mittels eines ortsveränderlichen Empfangssensors gemessen oder
   c) aus Messungen an einer anderen, aber vergleichbaren Meßstrecke abgeleitet werden.

3. Einrichtung zur Durchführung des Verfahrens nach einem der Ansprüche 1 oder 2 mit einer Anzahl von Ultraschall-Aufnehmern entlang einer Meßstrecke, deren Ausgänge über Verstärker und den Effektivwert bildende Komponenten mit einer Datenverarbeitungsanlage in Verbindung stehen, wobei die Datenverarbeitungsanlage zur Kalibrierung eines individuellen Ultraschall-Aufnehmers bezüglich seines VerstärkungsFaktors und seiner Ortskoordinate eingerichtet ist.

4. Einrichtung nach Anspruch 3, wobei in Richtung der Meßstrecke beidseitig des betreffenden individuellen Ultraschall-Aufnehmers jeweils ein Kalibriersender vorgesehen ist, deren Ultraschallsignale vom betreffenden Ultraschall-Aufnehmer gemessen werden.

**Claims**

1. Method for ultrasonic leakage locating, in which method the ultrasound levels measured at various measuring locations along a measuring distance are represented in a bar graph, and in which method the point of intersection of two straight lines in this bar graph is established in order to identify the leakage location, characterised in that a calibration of at least an individual one of the ultrasound pick-ups with respect to its amplification factor and its location error is carried out with the aid of a first transmitter which transmits along the measuring distance on the one side of the ultrasound pick-up to be calibrated and with the aid of a second transmitter which transmits on the other side of the ultrasound pick-up to be calibrated, in such a way that the ultrasound level produced by the first transmitter is measured with the aid of the ultrasound pick-up to be calibrated, from which a first logarithmised signal ($M_1$) is formed, that the ultrasound level produced by the second transmitter is measured with the aid of the ultrasound pick-up to be calibrated, from which a second logarithmised signal ($M_2$) is formed, and that these two signals ($M_1$, $M_2$) are compared with predetermined straight lines (G1, G2) in such a way that a correction value (d) for the location error and a correction value (K) for the amplification factor error result.

2. Method according to claim 1, characterised in that the two straight lines (G1, G2)

a) are established by means of sensors mounted in a location-accurate and correct manner, or

b) are measured by means of a portable receiving sensor, or

c) are derived from measurements on a different but comparable measuring distance.

3. Device for carrying out the method according to one of claims 1 or 2, having a number of ultrasound pick-ups along a measuring distance, the outputs of which pick-ups are connected by way of amplifiers and components forming the effective value to a data processing unit, with the data processing unit being set up for calibrating an individual ultrasound pick-up with respect to its amplification factor and its location coordinate.

4. Device according to claim 3, with there being provided, in the direction of the measuring distance, on either side of the respective individual ultrasound pick-up, a respective calibrating transmitter, the ultrasound signals of which are measured by the respective ultrasound pick-up.

**Revendications**

1. Procédé de localisation de fuites par ultrasons, dans lequel les niveaux des ultrasons mesurés à différents endroits de mesure le long d'une section de mesure sont représentés dans un diagramme en barres et dans lequel le point d'intersection de deux droites dans ce diagramme en barres est déterminé afin de repérer l'endroit de la fuite, caractérisé en ce qu'un calibrage d'au moins l'un des capteurs à ultrasons par rapport à son facteur d'amplification et à son erreur locale est exécuté à l'aide d'un premier émetteur, qui émet le long de la section de mesure sur l'un des côtés du capteur à ultrasons à calibrer, et à l'aide d'un deuxième émetteur, qui émet sur l'autre côté du capteur à ultrasons à calibrer, de telle sorte que le niveau d'ultrasons produit par le premier émetteur est mesuré à l'aide du capteur à ultrasons à calibrer, un premier signal logarithmé $(M_1)$ étant ainsi formé, que le niveau d'ultrasons produit par le deuxième émetteur est mesuré à l'aide du capteur à ultrasons à calibrer, un deuxième signal logarithmé $(M_2)$ étant ainsi formé, et que ces deux signaux $(M_1, M_2)$ sont comparés à des droites prédéfinies (G1, G2) de façon qu'une valeur de correction (d) pour l'erreur locale et une valeur de correction (K) pour l'erreur de facteur d'amplification en résulte.

2. Procédé selon la revendication 1, caractérisé en ce que les deux droites (G1, G2)

a) sont déterminées au moyen de capteurs montés correctement et de façon constante au lieu ou

b) sont mesurées au moyen d'un palpeur de réception mobile ou

c) sont dérivées de mesures faites sur une autre section de mesure mais comparable.

3. Dispositif d'exécution du procédé selon l'une des revendications 1 ou 2 comportant une quantité de capteurs à ultrasons le long d'une section de mesure, dont les sorties sont en relation avec un système de traitement de données au moyen d'amplificateurs et de composants formant la valeur effective, le système de traitement de données étant adapté pour le calibrage d'un capteur à ultrasons individuel par rapport à son facteur d'amplification et à ses coordonnées locales.

4. Dispositif selon la revendication 3, dans lequel est prévu, dans le sens de la section de mesure des deux côtés du capteur à ultrasons individuel concerné, à chaque fois un émetteur de calibrage, dont les signaux à ultrasons sont mesurés par le capteur à ultrasons concerné.